# EUROPEAN PATENT APPLICATION

(11) **EP 4 289 725 A1**
(43) Date of publication of application: **13.12.2023**
(21) Application number: 22215541.8
(22) Date of filing: 21.12.2022
(51) Int. Cl.: B64C 13/04, B60K 37/06

(54) **AIRCRAFT SYSTEM CONTROLLER AND ASSOCIATED METHOD**

(30) Priority: 09.06.2022 US 202263350480 P
(71) Applicant: Bombardier Inc., Dorval QC H4S1Y9 (CA)
(72) Inventor: OUELLETTE, Benoit, Montreal, H3G 0C7 (CA); PICHE, Patrice, Blainville, J7B 1S9 (CA)
(74) Representative: HGF

(57) **Abstract**

Controllers and methods for enabling an operator to interface with an aircraft system are provided. A method includes receiving a first input to the aircraft system via angular displacement of a rotatable knob in a first direction away from a neutral angular position of the rotatable knob, causing the rotatable knob to automatically return to the neutral angular position, and annunciating, via the rotatable knob, a first state of the aircraft system associated with the first input. The method also includes receiving a second input to the aircraft system from a source different from the rotatable knob, and annunciating, via the rotatable knob, a second state of the aircraft system associated with the second input.

## Description

### TECHNICAL FIELD

The disclosure relates generally to aircraft, and more particularly to devices for controlling aircraft systems.

### BACKGROUND

An aircraft flight deck typically includes flight instruments on an instrument panel, and controls that enable the pilot(s) to fly the aircraft. Existing controls can include physical switches that latch into a position associated with a particular input from the pilot. The physical position of the switch can provide awareness of a state of an aircraft system. However, for aircraft with higher levels of automation where a control system has the authority to autonomously change the state of the aircraft system independently of the switch, the position of the switch could potentially end up no longer being indicative of the actual state of the aircraft system. Improvement is desirable.

### SUMMARY

In one aspect, the disclosure describes an aircraft system controller enabling an operator to control an aircraft system. The aircraft system controller comprises:
a knob, wherein:
the knob is rotatable about a rotation axis in a first direction from a neutral angular position of the knob to a first angular position associated with a first input to the aircraft system;
the knob is rotatable about the rotation axis in a second direction from the neutral angular position of the knob to a second angular position associated with a second input to the aircraft system;
the knob is biased toward the neutral angular position to automatically return to the neutral angular position from the first angular position and from the second angular position; and
the knob is movable along the rotation axis, movement of the knob along the rotation axis being associated with a third input to the aircraft system; and
an annunciator displaying a visual indication associated with the aircraft system, the visual indication being visible within a periphery of the knob.

The visual indication may be configured to indicate a currently active state of the aircraft system commanded via the knob or commanded via another source different from the knob.

A radially outer surface of the knob may be non-axisymmetric about the rotation axis and may define a tactile cue indicating a current angular position of the knob.

The knob may include two diametrically-opposed recesses for accommodating parts of a hand of the operator.

The knob may be rotatable separately of the visual indication.

The aircraft system controller may include one or more hard stops limiting an angular displacement range of the knob to less than or equal to 180 degrees.

The aircraft system controller may include a releasable lock preventing rotation of the knob from the neutral angular position of the knob.

The lock may be releasable by movement of the knob along the rotation axis.

The annunciator may display a first indication to indicate a first state of the aircraft system, and a second indication different from the first indication to indicate a second state of the aircraft system.

The annunciator may display a third indication to indicate a third state of the aircraft system.

The visual indication may be a first visual indication indicating the first state of the aircraft system. The annunciator may include a first region for displaying the first visual indication. The annunciator may include a second region different from the first region, for displaying a second visual indication indicating a or the second state of the aircraft system. The annunciator may include a third region different from the first region and from the second region, for displaying a third visual indication indicating the third state of the aircraft system.

The aircraft system controller may include a detent providing a tactile cue indicative of an angular positioning of the knob.

The detent may indicate a third angular position of the knob between the neutral angular position and the first angular position. The third angular position may be associated with a fourth input to the aircraft system.

The rotation of the knob and the movement of the knob along the rotation axis may be mutually exclusive.

Embodiments may include combinations of the above features.

In a further aspect, the disclosure describes a vehicle comprising:
a vehicle system; and
a rotatable push button enabling an operator of the vehicle to control a state of the vehicle system, wherein:
   the push button is rotatable in a clockwise direction from a neutral angular position of the push button to a first angular position associated with a first input to the vehicle system;
   the push button is rotatable in a counter-clockwise direction from the neutral angular position of the push button to a second angular position associated with a second input to the vehicle system;
   the push button is biased toward the neutral angular position to automatically return to the neutral angular position from the first angular position and from the second angular position;
   the push button is depressable to provide a third input to the vehicle system; and
   the push button includes a face displaying a visual indication indicative of the state of the vehicle system.

The vehicle may be an aircraft. The aircraft may include a flight deck with an overhead panel. The push button may be located on the overhead panel.

The push button may be a first source of input for controlling the state of the vehicle system. The vehicle may include a second source of input for controlling the state of the vehicle system. The second source of input may be different from the push button. The visual indication may be indicative of the state of the vehicle system as controlled by the first source of input and by the second source of input.

The angular displacement range of the push button may be limited to less than or equal to 180 degrees.

Embodiments may include combinations of the above features.

In a further aspect, the disclosure describes a method of interfacing with an aircraft system. The method comprises:
receiving a first input to the aircraft system via angular displacement of a rotatable knob in a first direction away from a neutral angular position of the rotatable knob;
causing the rotatable knob to automatically return to the neutral angular position;
annunciating, via the rotatable knob, a first state of the aircraft system associated with the first input;
receiving a second input to the aircraft system from a source different from the rotatable knob; and
annunciating, via the rotatable knob, a second state of the aircraft system associated with the second input.

The method may comprise:
receiving a third input to the aircraft system via angular displacement of the rotatable knob in a second direction away from the neutral angular position of the rotatable knob, the second direction being opposite the first direction;
causing the rotatable knob to automatically return to the neutral angular position; and
annunciating, via the rotatable knob, a third state of the aircraft system associated with the third input.

The method may comprise receiving a fourth input to the aircraft system via linear displacement of the rotatable knob.

The method may comprise preventing the rotatable knob from being rotated by more than 180 degrees.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows a perspective view of an exemplary aircraft together with an exemplary flight deck of the aircraft;
FIG. 2 is a top plan view of an exemplary aircraft system controller of the flight deck of FIG. 1;
FIGS. 3A-3D are top plan views of the aircraft system control of FIG. 2 annunciating different states of an aircraft system;
FIG. 4 is a schematic elevation view of the aircraft system controller of FIG. 2;
FIG. 5 is a schematic elevation view of another exemplary aircraft system controller; and
FIG. 6 is a flow diagram of a method of interfacing with an aircraft system.

### DETAILED DESCRIPTION

The present disclosure describes system controllers and methods enabling an operator of a vehicle to control a system of the vehicle. While the system controllers and methods are described herein for use with aircraft, the system controllers and methods described herein could also be used for controlling systems of other types of mobile platforms (e.g., vehicles), and could also be used in stationary applications.

In some embodiments, a system controller described herein may provide an annunciation associated with a system state selected via the system controller. In the event where the system state is overridden by another authority different from the system controller, the annunciation may be automatically updated to reflect the new currently active (i.e., actual) system state. In some embodiments, the system controller may be biased to automatically return to a neutral position so that the physical position of the system controller may not be incorrectly indicative of a system state that is no longer active. Accordingly, the annunciation associated with the system controller may be representative of the currently active system state irrespective of the last system state that was commanded by the operator via the system controller, to improve operator awareness.

In some embodiments, the system controller described herein may be relatively easy and intuitive to use to facilitate utilization during periods of relatively high operator (e.g., pilot) workload, and to improve operator awareness. For example, in some embodiments, the system controller may provide a tactile cue to promote tactile awareness, tactile confirmation of actuation, and promote reliance on muscle memory during utilization. Such tactile cue may facilitate utilization of the system controller in a dark and/or smoke-filled aircraft cockpit for example.

The terms "attached" and "connected" may include both direct attachment or connection (in which two elements contact each other) and indirect attachment or connection (in which at least one additional element is located between the two elements). The term "substantially" as used herein may be applied to modify any quantitative representation which could permissibly vary without resulting in a change in the basic function to which it is related.

Aspects of various embodiments are described through reference to the drawings.

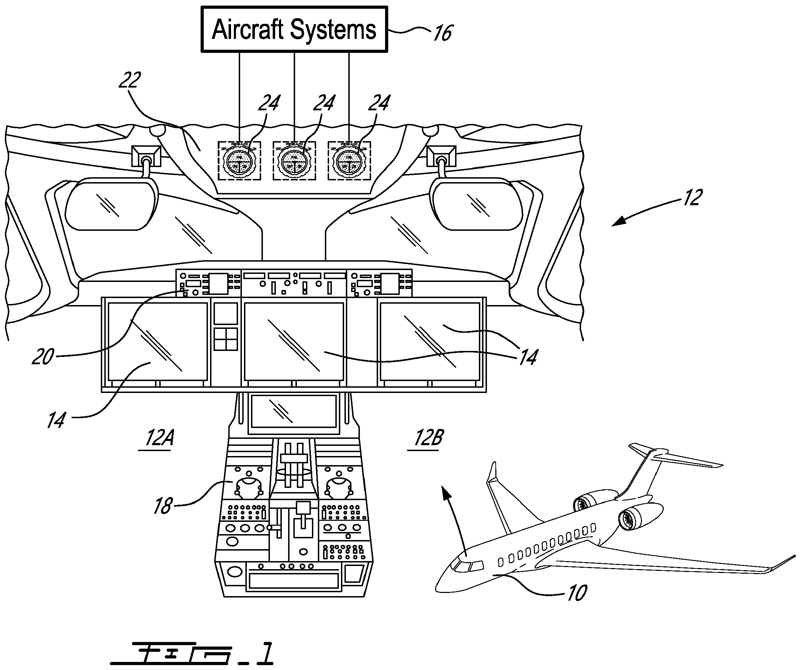

FIG. 1 shows an exemplary aircraft 10 and a partial schematic representation of flight deck 12, in a forward-looking orientation, and which may be part of aircraft 10. Aircraft 10 may be a corporate, private, commercial or any other type of aircraft. Aircraft 10 may be a fixed-wing aircraft or rotary-wing aircraft. For example, aircraft 10 may be an urban air mobility vehicle. Flight deck 12 may include additional elements than those shown and described herein. Flight deck 12 may include left portion 12A intended to be used by a pilot (also referred to as "captain") of aircraft 10 and right portion 12B intended to be used by a co-pilot (also referred to as "first officer") of aircraft 10. Left portion 12A and right portion 12B may include functionally identical components so that at least some operational redundancy may be provided between left portion 12A and right portion 12B of flight deck 12.

Flight deck 12 may include one or more display devices 14 providing respective display areas. Display devices 14 may be used to display operational and status information about various aircraft systems 16 (referred hereinafter in the singular), information related to flight/mission planning, maps and any other information that may be useful for the operator(s) during the operation of aircraft 10. Display devices 14 may also permit dialog between the operator(s) and aircraft system 16 via a suitable graphical user interface. Aircraft system 16 may include a hydraulic system (e.g., one or more hydraulic pumps), an electrical system, a fuel system (e.g., one or more fuel pumps), an environment control system, and/or an anti-icing system of aircraft 10 for example.

Flight deck 12 may include one or more physical operator input devices with which the operator(s) may manually interact. Such physical operator input devices may include one or more cursor control devices, one or more multi-function keypads, switches, buttons and knobs, for interfacing with various aircraft systems 16. The physical operator input devices may be disposed on pedestal 18, glare shield 20 and/or on overhead panel 22 of flight deck 12. The physical operator input devices may include one or more system controllers 24 (referred hereinafter in the singular as "controller 24") as described further below. In some embodiments, features (e.g., tactile cue, return to center) that facilitate the use of controller 24 may be particularly well suited for having controller 24 disposed on overhead panel 22. However, controller 24 may also be suitable for use on pedestal 18, on glare shield 20, or at some other location within flight deck 12. Controller 24 may be operatively connected to aircraft system 16 to enable the operator to control aircraft system 16.

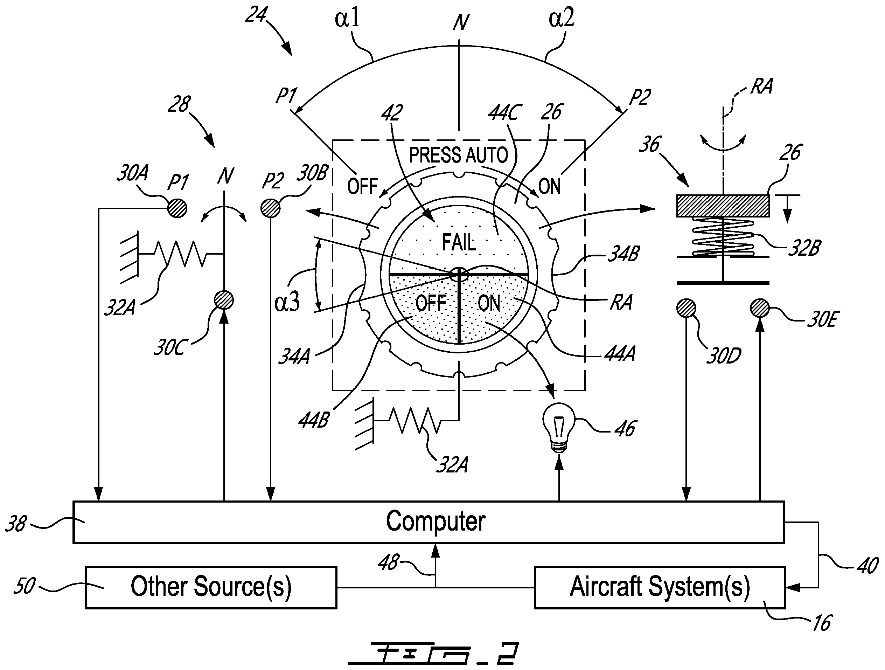

FIG. 2 is a top plan view of an exemplary controller 24 of flight deck 12 of FIG. 1. Controller 24 may enable an operator of aircraft 10 to control aircraft system 16. In some embodiments, controller 24 may be considered a momentary, multiple (e.g., three or more) position system controller. Controller 24, may include rotatable knob 26 that may be rotatable about rotation axis RA. In some embodiments, knob 26 may be configured as a rotatable push button that may be used to provide input to aircraft system 16 by way of rotation of knob 26 and also by way of depressing (or pulling) knob 26.

Knob 26 may be rotatable about rotation axis RA in a first (e.g., counter-clockwise) direction from neutral (e.g., central) angular position N to first angular position P1 associated with a first input to aircraft system 16. In some embodiments, neutral angular position N of knob 26 may not be associated with any specific input to aircraft system 16, or with any specific state of aircraft system 16. As shown in FIG. 2, first angular position P1 of knob 26 may be used to command an OFF state of aircraft system 16. Similarly, knob 26 may be rotatable about rotation axis RA in a second (e.g., clockwise) direction from neutral angular position N to second angular position P2 associated with a second input to aircraft system 16.

As shown in FIG. 2, second angular position P2 of knob 26 may be used to command an ON state of aircraft system 16. In some embodiments, knob 26 may be connected to double-throw switch 28 as shown in FIG. 2, or may be connected to multiple single-throw switches for example. Switch 28 may include first terminal 30A associated with first angular position P1 of knob 26, second terminal 30B associated with second angular position P2 of knob 26, and common third terminal 30C. Accordingly, electrical communication between first terminal 30A and third terminal 30C may indicate that knob 26 is in first angular position P1, and electrical communication between second terminal 30B and third terminal 30C may indicate that knob 26 is in second angular position P2. Alternatively, the lack of electrical communication between first terminal 30A and third terminal 30C, or between second terminal 30B and third terminal 30C may indicate that knob 26 is in neutral angular position N.

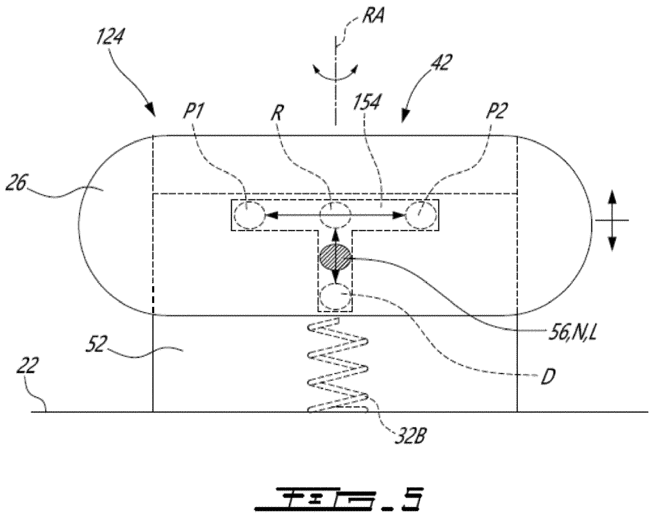

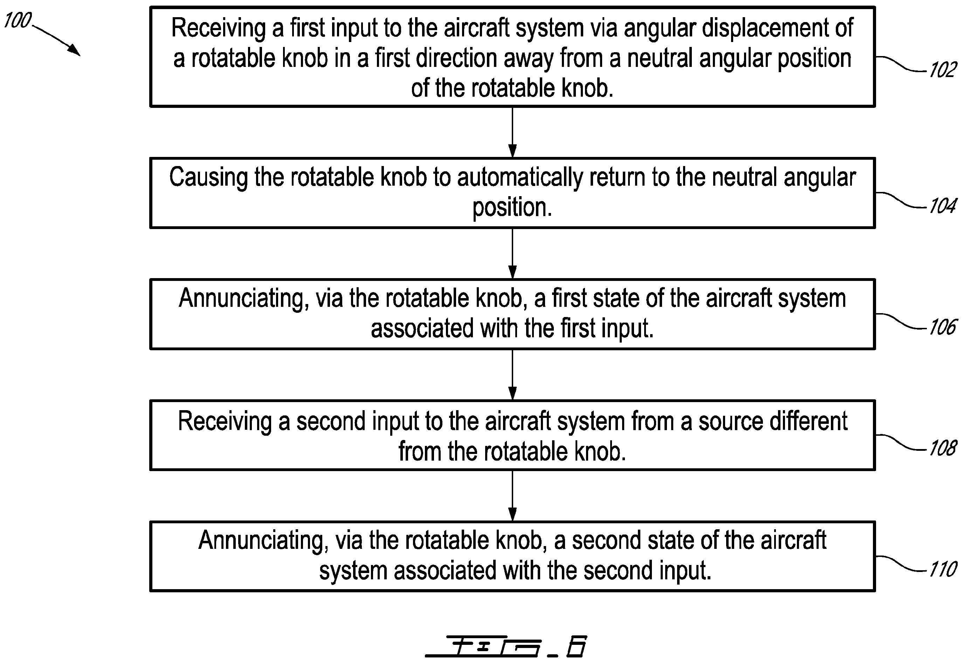

Knob 26 may be resiliently biased toward neutral angular position N to automatically return to neutral angular position N from first angular position P1 and also from second angular position P2. Such resilient biasing may provide a "return-to-center" behaviour of knob 26 when the operator releases knob 26. The resilient biasing of knob 26 toward neutral angular position N may be achieved by way of first spring 32A shown schematically in FIG. 2. As explained further below in reference to FIGS. 5 and 6, the angular displacement of knob 26 may be limited to within a predetermined angular range represented by α1+α2 in FIG. 2. In other words, knob 26 may not be infinitely rotatable about rotation axis RA. In some embodiments, the angular range of knob 26 may be limited to less than 360 degrees. In some embodiments, the angular range of knob 26 may be limited to less than or equal to 180 degrees. In some embodiments, the angular range of knob 26 may be between 10 degrees and 180 degrees. In some embodiments, the angular range of knob 26 may be between 10 degrees and 90 degrees. In some embodiments, the angular range of knob 26 may be between 90 degrees and 120 degrees to provide between 45 degrees and 60 degrees of travel on both sides of neutral angular position N. In some embodiments, the angular movement of knob 26 in opposite directions from neutral angular position N may be limited to substantially equal amounts so that α1=α2. Alternatively, the angular movement of knob 26 in opposite directions from neutral angular position N may be limited to different amounts so that α1≠α2.

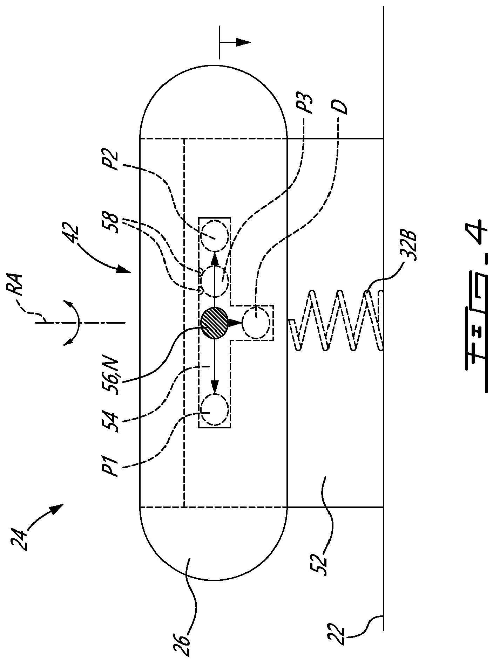

In some embodiments, controller 24 may provide tactile feedback to the operator to indicate that knob 26 has been rotated adequately into position. Such tactile feedback may be provided by a detent such as detent 58 shown in FIG. 4, or by knob 26 reaching a hard stop for example. In some embodiments, detents 58 (shown in FIG. 4) may be incorporated into controller 24 to define additional angular positions that are associated with inputs to aircraft system 16. Such additional angular positions may be intermediate angular positions located between first angular position P1 and angular position P2. Such detents may provide tactile feedback to the operator and also permit controller 24 to be able to supply additional (e.g., more than three types of) inputs to aircraft system 16.

The shape and configuration of knob 26 may be configured to provide one or more a tactile cues to the operator to indicate the presence of knob 26, permit the operator to identify knob 26, and also to indicate the angular position of knob 26 relative to neutral angular position N. Such tactile cue(s) may facilitate the use of controller 24 without necessarily having to look at controller 24, and/or in a dark and/or smoke-filled cockpit for example. Controller 24 may be configured for single-hand operation. In some embodiments, a radially outer surface of knob 26 may be non-axisymmetric about rotation axis RA to define one or more tactile cues indicating the angular position of knob 26, and providing tactile confirmation of rotation of knob 26. For example, knob 26 may include one or more recesses 34A, 34B that are sized and configured to accommodate part(s) of a hand of the operator. In some embodiments, two recesses 34A, 34B may be diametrically opposed relative to rotation axis RA. In relation to an upright orientation of controller 24 as shown in FIG. 2, recesses 34A, 34B may be laterally opposed to facilitate the grasping of knob 26 between a thumb and an index finger of a same hand for example. Recesses 34A, 34B may have substantially identical or different sizes and configurations. In some embodiments, one or both of recesses 34A, 34B may have an angular span of between 10 degrees and 60 degrees around rotation axis RA.

Knob 26 may also be linearly movable (e.g., translatable) along rotation axis RA and may be operable as a push button and/or as a pull knob for providing a third input and optionally a fourth input to aircraft system 16. Knob 26 may be resiliently biased toward its stowed (pushed) position, toward its deployed (pulled) position or toward an intermediate position between the stowed position and the deployed position by way of a suitable spring.

In reference to FIG. 2 for example, knob 26 may additionally be represented as a rotatable and spring-loaded push button 36 as shown schematically in FIG. 2. Accordingly, the third input may be provided to aircraft system 16 by way of depressing knob 26 to establish electric communication between fourth terminal 30D and fifth terminal 30E for example. Knob 26 may be resiliently biased toward its undepressed position by way of second spring 32B. As explained in relation to FIG. 4, the rotation of knob 26 and pushing of knob 26 may be mutually exclusive in some embodiments.

In some embodiments, knob 26 may instead be configured as a pull knob where the third (or fourth) input may be provided to aircraft system 16 by way of axially pulling on knob 26 to establish electric communication between fourth terminal 30D and fifth terminal 30E for example.

In some embodiments, knob 26 may be configured as a push knob and as a pull knob where the third input is provided to aircraft system 16 by way of axially pushing on knob 26 to establish electric communication between fourth terminal 30D and fifth terminal 30E for example, and where the fourth input is provided to aircraft system 16 by way of axially pulling on knob 26 to establish electric communication between sixth and seventh terminals (not shown) for example. In such embodiment, knob 26 may be resiliently biased toward an intermediate position in which fourth terminal 30D and fifth terminal 30E are normally electrically disconnected, and the sixth and seventh terminals are also normally electrically disconnected.

In some embodiments, the pushing of knob 26 may provide the third input to aircraft system 16, and the pulling of knob 26 may provide a protection function for controller 24 instead of providing an input to aircraft system 16. Such protection function may prevent knob 26 from being rotated to one or both sides of neutral angular position N for example. Such protection function may require the operator to perform a second action to override the protection afforded on one or both directions of rotation.

In some embodiments, the pulling of knob 26 may provide the third input to aircraft system 16, and the pushing of knob 26 may provide a protection function for controller 24 instead of providing an input to aircraft system 16. Such protection function may prevent knob 26 from being rotated to one or both sides of neutral angular position N for example. Such protection function may require the operator to perform a second action to override the protection afforded on one or both directions of rotation.

In some embodiments, the first input, second input and/or third input may be indicative of commanded states of aircraft system 16. For example, the first input associated with knob 26 being at first angular position P1 may be indicative of a commanded OFF state of aircraft system 16. The second input associated with knob 26 being at second angular position P2 may be indicative of a commanded ON state of aircraft system 16. The third input associated with knob 26 being depressed along rotation axis RA may be indicative of a commanded AUTO (i.e., automatic) operating state of aircraft system 16. In some embodiments, the first input, second input and/or third input may be indicative of set points, operating parameters or other data that may be provided as input to aircraft system 16.

The first input, second input and/or third input that may be received from the operator via knob 26, or may be provided to aircraft system 16 by any suitable analog or digital means. In some embodiments, controller 24 may be operatively connected to computer 38 so that computer 38 may receive the first input, second input and third input from controller 24, and may communicate with aircraft system 16 accordingly. In some embodiments, computer 38 may include a microcontroller operatively connected to wait for input(s) from controller 24 by monitoring electrical communication between the applicable terminals 30A-30E, and generate suitable output(s) 40 for controlling aircraft system 16. In some embodiments, computer 38 may be integrated with controller 24. Computer 38 may include one or more data processors and one or more computer-readable memories storing machine-readable instructions executable by the data processor(s) and configured to cause the data processor(s) to generate one or more outputs 40 (e.g., signals) for causing the execution of steps of methods described herein. In some embodiments, computer 38 may be part of an avionics suite of aircraft 10 and may carry out additional functions than those described herein.

Controller 34 may include annunciator 42, which may display one or more visual (e.g., textual and/or graphical) indications 44A-44C associated with aircraft system 16. In some embodiments, annunciator 42 may include one or more suitable display devices and/or indicator lights 46 (e.g., light-emitting diodes, incandescent light bulb(s)) associated with one or more of visual indications 44A-44C. Visual indications 44A-44C may be disposed and visible within a radially outer periphery of knob 26 when viewed along rotation axis RA as illustrated in FIG. 2. For example, visual indications 44A-44C may be disposed centrally of knob 26. Visual indications 44A-44C may be integrated with knob 26, or may be separate from knob 26. For example, visual indications 44A-44C may be visible on an upper face of knob 26. In some embodiments, knob 26 may be rotatable separately of visual indications 44A-44C so that visual indications 44A-44C may remain stationary when knob 26 is rotated. In various embodiments, visual indications 44A-44C may be visible through a transparent upper face of knob 26, or may be visible through a central opening of knob 26.

Visual indications 44A-44C may be indicative of the (e.g., ON, OFF, AUTO, FAIL, FAULT) currently active state of aircraft system 16, whether the state of aircraft system 16 was commanded via controller 24 or from another authority such as other source(s) 50. In other words, visual indications 44A-44C may be indicative of the currently active state of aircraft system 16 irrespective of the first input, the second input and the third input received via knob 26. In some embodiments, the currently active state of aircraft system 16 may be determined by computer 38 based on a last commanded state of aircraft system 16, whether the last commanded state was commanded via knob 26 or by other source(s) 50. In some embodiments, the currently active state of aircraft system 16 may be sensed via one or more sensors associated with aircraft system 16 and in data communication with computer 38 so that the currently active state of aircraft system 16 may be determined independently of any input(s) received via knob 26 and/or other source(s) 50.

Computer 38 may receive external input(s) 48 that are generated externally of controller 24 and that are communicated to computer 38. Such external input(s) 48 may include sensed data indicative of a currently active state of aircraft system 16. Such external input(s) 48 may include a commanded state of aircraft system 16 received from one or more other sources 50 different from controller 24. Examples of other sources 50 (i.e., authorities) that may influence the state of aircraft system 16 may include an alternate operator interface such as a touch-sensitive display device, switch, button, knob, cursor control device, and/or a virtual operator interface displayed on display device 14. Another example of another source 50 that may influence the state of aircraft system 16 may be an automated (e.g., auto-flight) system of aircraft 10 that may automatically alter the state of aircraft system 16 based on sensed input for example.

In some embodiments, different states of aircraft system 16 may be annunciated using different colors, and/or by visual indications 44A-44C being displayed in different regions of annunciator 42. For example, annunciator 42 may display a first color to indicated a first state of aircraft system 16, a second color to indicate a second state of aircraft system 16, and/or a third color to indicate a third state of aircraft system 16. For example, the ON state may represent an operative state of aircraft system 16, and may be annunciated by first visual indication 44A including the letters "ON" shown in green on a black background. The OFF state may represent an inoperative state of aircraft system 16, and may be annunciated by second visual indication 44B including the letters "OFF" shown in white on a black background. The FAIL state of aircraft system 16 may represent a sensed failure and may be annunciated by third visual indication 44C including the letters "FAIL" shown in black on a yellow background.

In some embodiments, different visual indications 44A-44C may be provided in different regions of annunciator 42. For example, first visual indication 44A may be located in a lower right region of annunciator 42. Second visual indication 44B may be located in a lower left region of annunciator 42. Third visual indication 44C may be disposed in an upper region of annunciator 42.

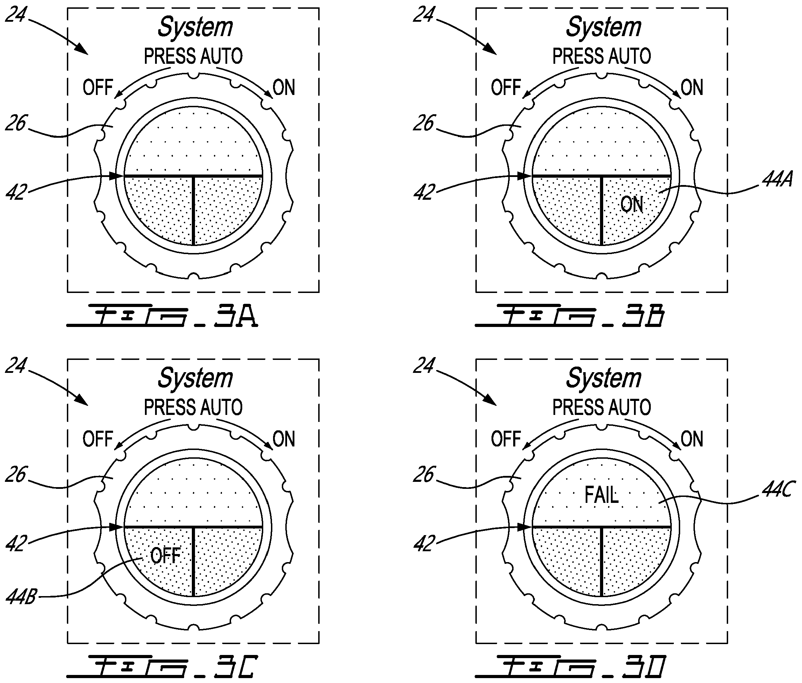

FIG. 3A-3D are top plan views of controller 24 annunciating different states of aircraft system 16. FIG. 3A shows controller 24 in state where annunciator 42 displays no visual indications. The illustration of FIG. 3A may represent a state where aircraft 10 is powered down. FIG. 3B shows controller 24 in a state where annunciator 42 displays first visual indication 44A indicating the ON state of aircraft system 16. FIG. 3C shows controller 24 in a state where annunciator 42 displays second visual indication 44B indicating the OFF state of aircraft system 16. FIG. 3D shows controller 24 in a state where annunciator 42 displays third visual indication 44C indicating the FAIL state of aircraft system 16.

FIG. 4 is a schematic elevation view of controller 24. Knob 26 of controller may be mounted onto stem 52. Part of stem 52 may be received inside of knob 26 so that knob 26 may be rotatable and translatable relative to stem 52. Stem 52 may be attached to overhead panel 22. In some embodiments, annunciator 42 may be located at an end of stem 52 opposite of overhead panel 22.

The rotation of knob 26 about rotation axis RA may be limited to prevent infinite rotation of knob 26 about rotation axis RA. In some embodiments hard stops may be used to limit the rotation of knob 26 within the desired angular displacement range. In some embodiments, the hard stops may be defined by way of slot 54 defined in stem 52, and cooperating pin 56 attached to knob 26. Pin 56 may extend into slot 54, and be movably engaged with slot 54. The shape of slot 54 may be selected to limit the rotational and translational movement of knob 26 relative to stem 52. FIG. 4 shows pin 56 at neutral angular position N. FIG. 4 also shows in broken lines other potential positions of pin 56 corresponding to first angular position P1 (i.e., first input to aircraft system 16) and second angular position P2 (i.e., second input to aircraft system 16). In some embodiments, slot 54 may be T-shaped to also permit pressing of knob 26 as a push button. FIG. 4 also shows potential position D of pin 56 corresponding to the depressed position of knob 26 to provide the third input to aircraft system 16. Second spring 32B may be a compressive spring biasing knob 26 away from overhead panel 22.

The rotation of knob 26 and the pushing (or pulling) of knob 26 may be mutually exclusive in some embodiments. For example, the configuration shown in FIG. 4 may prevent knob 26 from being rotated and simultaneously moved axially for the purpose of providing system input. In reference to FIG. 4, when knob 26 is rotated from neutral angular position N, slot 54 and pin 56 may prevent knob 26 from being moved axially. On the other hand, when knob 26 is at neutral angular position N and pushed axially toward position D, rotation of knob 26 may then be prevented.

Slot 54 may include one or more optional detents 58 in the form of protrusions that may hinder the movement of pin 56 inside slot 54 in order to define one or more additional angular positions that are associated with additional inputs that may be provided to aircraft system 16 via knob 26. Detent(s) 58 may include any suitable mechanism than may keep pin 56 in a certain position relative to slot 54, and which can be released by the application of force to pin 56 for example. FIG. 4 shows two detents 58 defining a third angular position P3 of pin 56 therebetween. Third angular position P3 may be located between neutral angular position N and first angular position P1, or between neutral angular position N and second angular position P2.

A slot having an inverted T-shape could instead be used to permit pulling of knob 26 instead of depressing knob 26, and a suitable second spring may be configured to bias knob 26 toward overhead panel 22 instead. It is understood that a suitable slot could instead be formed in a surface of knob 26, and that a cooperating pin could instead be attached to stem 52.

FIG. 5 is a schematic elevation view of another exemplary controller 124. Controller 124 may include elements of controller 24 described above, and like elements are identified using like reference numerals. In contrast with controller 24, controller 124 may have T-shaped slot 154 which may define a releasable lock preventing rotation of knob 26 from neutral angular position N of knob 26. The releasable lock may be useful in preventing unintentional rotation of knob 26. In FIG. 5, neutral angular position N may also correspond to locked position L of knob 26. In the locked position L, rotation of knob 26 may be prevented. Pulling of knob 26 along rotation axis RA and away from overhead panel 22 so that pin 56 adopts released position R may unlock the rotation of knob 26 and permit knob 26 to be rotated so that pin 56 may adopt first angular position P1 (i.e., first input to aircraft system 16) and second angular position P2 (i.e., second input to aircraft system 16). Slot 154 could instead have a shape that provides a releasable lock that prevents rotation of knob 26 in only one direction or in both directions. A depression of knob 26 so that pin 56 adopts depressed position D may be used to provide the third input to aircraft system 16.

As explained in reference to controller 24, controller 124 could also be configured so that unlocking of knob 26 and the generation of the third input may be done by pushing knob 26 toward overhead panel 22.

FIG. 6 is a flow diagram of method 100 of interfacing with an aircraft system 16. Method 100 may be executed using controller 24, 124 described herein or using another controller. Aspects of controllers 24, 124 may be incorporated into method 100. In various embodiments, method 100 may include:
receiving a first input to aircraft system 16 via angular displacement of knob 26 in a first direction away from neutral angular position N of rotatable knob 26 (block 102);
causing knob 26 to automatically return to neutral angular position N (block 104);
annunciating, via knob 26, a first state of aircraft system 16 associated with the first input (block 106);
receiving a second input to aircraft system 16 from other source 50 different from knob 26 (block 108); and
annunciating, via knob 26, a second state of the aircraft system associated with the second input (block 110).

Annunciating the different states of aircraft system 16 may be done by providing one or more (e.g., graphical, textual) visual indications 44A-44C.

In some embodiments, method 100 may include: receiving a third input to aircraft system 16 via angular displacement of knob 26 in a second direction away from neutral angular position N of knob 26. The second direction may be opposite the first direction. Knob 26 may be caused to automatically return to neutral angular position N by resilient biasing provided by first spring 32A for example. Method 100 may include annunciating, via knob 26, a third state of aircraft system 16 associated with the third input.

Method 100 may include receiving a fourth input to aircraft system via linear displacement of knob 26.

Method 100 may include preventing knob 26 from being rotated by more than 180 degrees.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. An aircraft system controller enabling an operator to control an aircraft system (16), the aircraft system controller comprising:
a knob (26), wherein:
the knob (26) is rotatable about a rotation axis (RA) in a first direction from a neutral angular position (N) of the knob (26) to a first angular position (P1) associated with a first input to the aircraft system (16);
the knob (26) is rotatable about the rotation axis (RA) in a second direction from the neutral angular position (N) of the knob (26) to a second angular position (P2) associated with a second input to the aircraft system (16);
the knob (26) is biased toward the neutral angular position (N) to automatically return to the neutral angular position (N) from the first angular position (P1) and from the second angular position (P2); and
the knob (26) is movable along the rotation axis (RA), movement of the knob (26) along the rotation axis (RA) being associated with a third input to the aircraft system (16); and
an annunciator (42) displaying a visual indication (44A-44C) associated with the aircraft system (16), the visual indication (44A-44C) being visible within a periphery of the knob (26).

2. The aircraft system controller as defined in claim 1, wherein the visual indication (44A-44C) is configured to indicate a currently active state of the aircraft system (16) commanded via the knob (26) or commanded via another source different from the knob (26).

3. The aircraft system controller as defined in claim 1 or claim 2, wherein a radially outer surface of the knob (26) is non-axisymmetric about the rotation axis (RA) and defines a tactile cue indicating a current angular position of the knob (26).

4. The aircraft system controller as defined in any one of claim 1 to 3, wherein the knob (26) includes two diametrically-opposed recesses for accommodating parts of a hand of the operator.

5. The aircraft system controller as defined in any one of claims 1 to 4, wherein the knob (26) is rotatable separately of the visual indication (44A-44C).

6. The aircraft system controller as defined in any one of claims 1 to 5, comprising one or more hard stops limiting an angular displacement range of the knob (26) to less than or equal to 180 degrees.

7. The aircraft system controller as defined in any one of claims 1 to 6, comprising a releasable lock preventing rotation of the knob (26) from the neutral angular position (N) of the knob (26).

8. The aircraft system controller as defined in claim 7, wherein the lock is releasable by movement of the knob (26) along the rotation axis (RA).

9. The aircraft system controller as defined in any one of claims 1 to 8, wherein the annunciator (42) displays a first indication to indicate a first state of the aircraft system (16), and a second indication different from the first indication to indicate a second state of the aircraft system (16).

10. The aircraft system controller as defined in claim 9, wherein the annunciator (42) displays a third indication to indicate a third state of the aircraft system (16).

11. The aircraft system controller as defined in any one of claims 1 to 10, wherein:
the visual indication (44A-44C) is a first visual indication (44A) indicating a or the first state of the aircraft system (16);
the annunciator (42) includes a first region for displaying the first visual indication (44A);
the annunciator (42) includes a second region different from the first region, for displaying a second visual indication (44B) indicating a or the second state of the aircraft system (16); and
the annunciator (42) includes a third region different from the first region and from the second region, for displaying a third visual indication indicating a or the third state of the aircraft system (16).

12. The aircraft system controller as defined in any one of claims 1 to 11, including a detent (58) providing a tactile cue indicative of an angular positioning of the knob (26).

13. The aircraft system controller as defined in claim 12, wherein the detent (58) indicates a third angular position of the knob (26) between the neutral angular position (N) and the first angular position (P1), the third angular position being associated with a fourth input to the aircraft system (16).

14. The aircraft system controller as defined in any one of claims 1 to 13, wherein rotation of the knob (26) and movement of the knob (26) along the rotation axis (RA) are mutually exclusive.

15. A method of interfacing with an aircraft system (16), the method comprising:
receiving a first input to the aircraft system (16) via angular displacement of a rotatable knob (26) in a first direction away from a neutral angular position (N) of the rotatable knob (26);
causing the rotatable knob (26) to automatically return to the neutral angular position (N);
annunciating, via the rotatable knob (26), a first state of the aircraft system (16) associated with the first input;
receiving a second input to the aircraft system (16) from a source different from the rotatable knob (26); and
annunciating, via the rotatable knob (26), a second state of the aircraft system (16) associated with the second input.
